# EUROPEAN PATENT SPECIFICATION

(11) **EP 1 375 950 B1**
(45) Date of publication and mention of the grant of the patent: **04.10.2006**
(21) Application number: 03014725.0
(22) Date of filing: 27.06.2003
(51) Int. Cl.: F16D 48/06

(54) **Clutch control apparatus**
Kupplungssteuerungsgerät
Dispositif de commande d'embrayage

(30) Priority: 27.06.2002 JP 2002187731
(43) Date of publication of application: 02.01.2004
(73) Proprietor: AISIN SEIKI KABUSHIKI KAISHA, Kariya-shi, Aichi-ken (JP); Toyota Jidosha Kabushiki Kaisha, Toyota-shi, Aichi-ken (JP)
(72) Inventor: Terakawa, Tomomitsu, Anjo-shi, Aichi-ken (JP); Yamada, Masanobu, Toyota-shi, Aichi-ken (JP); Kohno, Tetsuya, Toyota-shi, Aichi-ken (JP); Maeda, Yasuhiro, Toyota-shi, Aichi-ken (JP)
(74) Representative: TBK-Patent

(56) References cited:
- EP-A- 1 103 737
- EP-A- 1 111 262
- US-A- 4 664 239
- PATENT ABSTRACTS OF JAPAN vol. 012, no. 294 (M-730), 11 August 1988 (1988-08-11) & JP 63 071441 A (DIESEL KIKI CO LTD), 31 March 1988 (1988-03-31)

## Description

This invention generally relates to a clutch control apparatus provided with a clutch for a torque transmitting between a driving power source such as an internal combustion engine and a transmission for use in a vehicle. More particularly, this invention pertains to a clutch control apparatus used for compensating for abrasion of a clutch facing.

### BACKGROUND OF THE INVENTION

A clutch control apparatus has been disclosed in a European Patent Application Publication published as No. 1103737A2 corresponding to a Japanese Patent Laid-Open Application published as No. 2001 - 153156. The clutch control apparatus for use in a vehicle is provided with a clutch for a torque transmitting between a driving power source such as an internal combustion engine and a transmission. The clutch control apparatus is provided with an adjusting member for compensating for abrasion of a clutch facing. When a vehicle is under a driving condition that the clutch is not resonated, the clutch control apparatus judges whether or not the compensation for the abrasion of the clutch facing is demanded based upon a value corresponding to a wear degree of the clutch facing. Therefore, the clutch abrasion can be effectively compensated with higher compensating precision.

Document EP1103737, which can be considered as the closest prior Art shows all the features of the preamble of claim 1

The described clutch control apparatus judges whether or not the compensation for the abrasion of the clutch facing is necessary when the driving power source has been surely inactive during an ignition switch being off. The clutch control apparatus hence can judge the necessity of the compensation of the clutch abrasion with a relatively high precision.

However, the clutch abrasion is actually compensated by the clutch control apparatus by operating the adjusting member when the clutch has been disengaged, an engine rotational number is within a predetermined range, and a vehicle speed is zero. In this case, the engine has been rotated when the adjusting member actually compensates for the clutch abrasion. Accordingly, the clutch abrasion may not be compensated with high precision due to resonation of the clutch disc along with the rotation of the engine.

Accordingly, a need exists for providing an improved clutch control apparatus provided with an adjusting member for compensating for abrasion of the clutch facing.

### SUMMARY OF THE INVENTION

In light of the foregoing, a clutch control apparatus according to the present invention comprises a clutch assembly including a fly wheel integrally rotatable with an output shaft of a driving power source, a clutch disc frictionally engageable between a pressure plate and the fly wheel to establish a frictional driving connection, a diaphragm spring capable of changing the frictional driving connection of the clutch disc when the diaphragm spring is applied with a force by an actuator, and an adjusting means disposed between the pressure plate and the diaphragm spring for transmitting an operating force from the diaphragm spring to the pressure plate and for varying an axial spacing between the diaphragm spring and the pressure plate to compensate for wear of the clutch disc. The clutch control apparatus further comprises a controlling means for controlling operation of the actuator. The clutch control apparatus is characterized in that the controlling means controls the operation of the actuator for changing the axial spacing between the diaphragm spring and the pressure plate during a driving power source being inactive when the controlling means judges that the axial spacing between the diaphragm spring and the pressure plate is needed to be changed by the adjusting means.

As described above, the axial spacing between the diaphragm spring and the pressure plate is changed by the adjusting means by activating the actuator only when the driving power source is inactive. Therefore, when the actuator actually has been activated, the actuator and the adjusting member is not resonated by the vibration due to the engine operation. Therefore, the abrasion of the clutch can be effectively compensated with high precision.

It is preferable that the controlling means judges whether or not the axial spacing between the diaphragm spring and the pressure plate is needed to be changed by the adjusting means when the driving power source is inactive. Therefore, the judgment can be effectively performed without being affected by the engine vibration.

It is further preferable that the controlling means controls the operation of the actuator for changing the axial spacing between the diaphragm spring and the pressure plate by the adjusting means when a rotational number of the driving power source is substantially zero.

It is still further preferable that the controlling means controls the operation of the actuator for changing the axial spacing between the diaphragm spring and the pressure plate by the adjusting means when a vehicle speed is substantially zero. Therefore, the clutch abrasion can be effectively compensated without being affected not only by other factors as well as the engine vibration.

It is still further preferable that the controlling means controls the operation of the actuator for changing the axial spacing between the diaphragm spring and the pressure plate by the adjusting means by the time when the clutch disc is frictionally engaged with the fly wheel since the time when the driving power source stops. In this case, in a vehicle in which the clutch is shifted to the engaged condition and the vehicle is parked with a predetermined shift stage being engaged when the driving power source stops, the clutch abrasion can be compensated by the adjusting means within a time range from the engine stop to the parking operation with the shift stage being engaged.

It is still further preferable that the clutch control apparatus further comprises a means for determining an abrasion amount of the clutch disc. The controlling means judges that the axial spacing between the diaphragm spring and the pressure plate is needed to be changed by the adjusting means when the determined abrasion amount is greater than a predetermined abrasion amount. In this case, the adjusting operation is performed only when it is needed. Therefore, the clutch control apparatus according to the present invention can effectively reduce possible misadjustments which may occur due to unnecessary adjusting operations.

### BRIEF DESCRIPTION OF THE DRAWING FIGURES

The foregoing and additional features and characteristics of the present invention will become more apparent from the following detailed description considered with reference to the accompanying drawing figures wherein:
FIG. 1 is a block view schematically illustrating an entire clutch, control apparatus according to an embodiment of the present invention;
FIG. 2 is a sectional view illustrating a clutch shown in FIG. 1;
FIG. 3 is front view illustrating the clutch shown in FIG. 1;
FIG. 4 (A ) is a partial view of the clutch shown in FIG. 1 for.explaining a condition of a diaphragm spring and a pressure plate during a vehicle normal driving, in which the diaphragm spring is in contact with the pressure plate via an adjusting means;

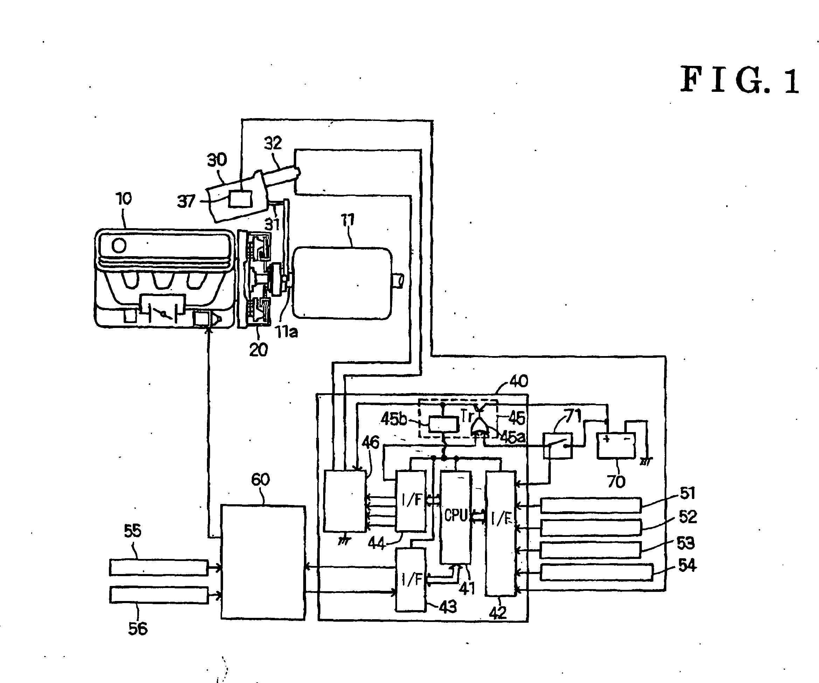

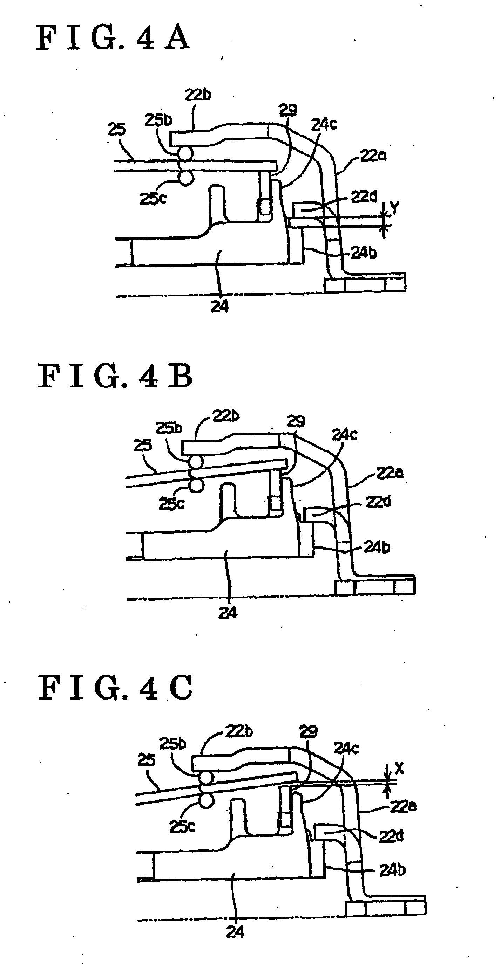

FIG. 4 (B ) is a partial view of the clutch shown in FIG. 1 for explaining a condition of the diaphragm spring and the pressure plate, in which compensating operation of a clutch abrasion commences;
FIG. 4 ( C ) is a partial view of the clutch shown in FIG. 1 for explaining a condition of the diaphragm spring and the pressure plate, in which the diaphragm spring is further pivotably moved for compensating an abrasion of a clutch disc;

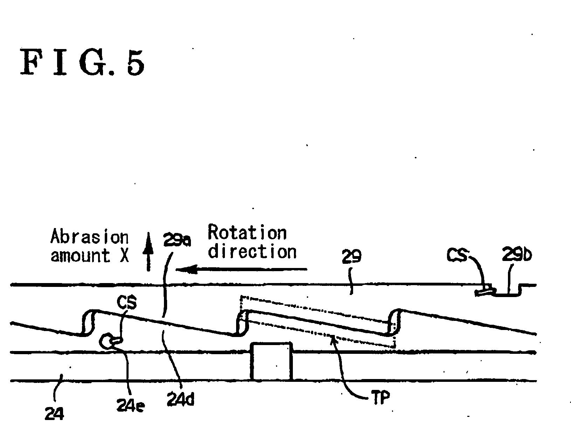

FIG. 5 explains an operation of an adjustment wedge member illustrated in FIG. 1;

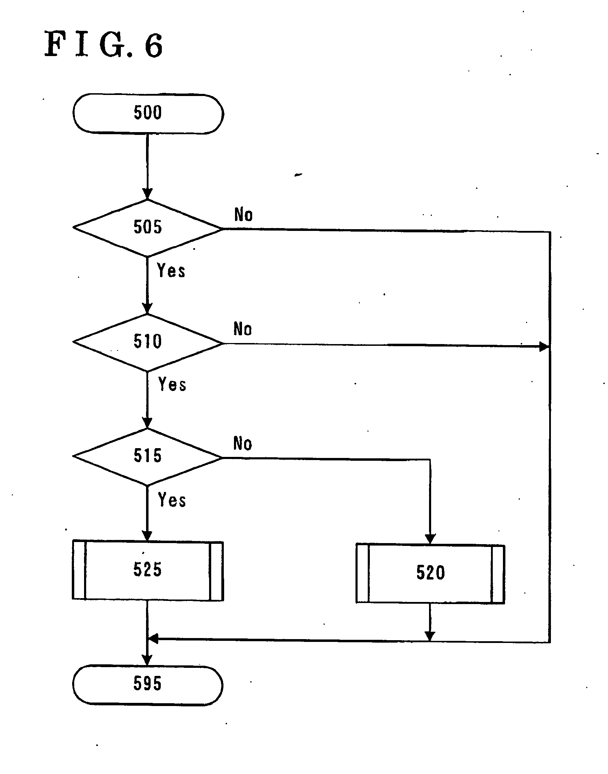

FIG. 6 illustrates a flowchart for explaining a routine for controlling an adjusting operation performed by a CPU shown in FIG. 1;

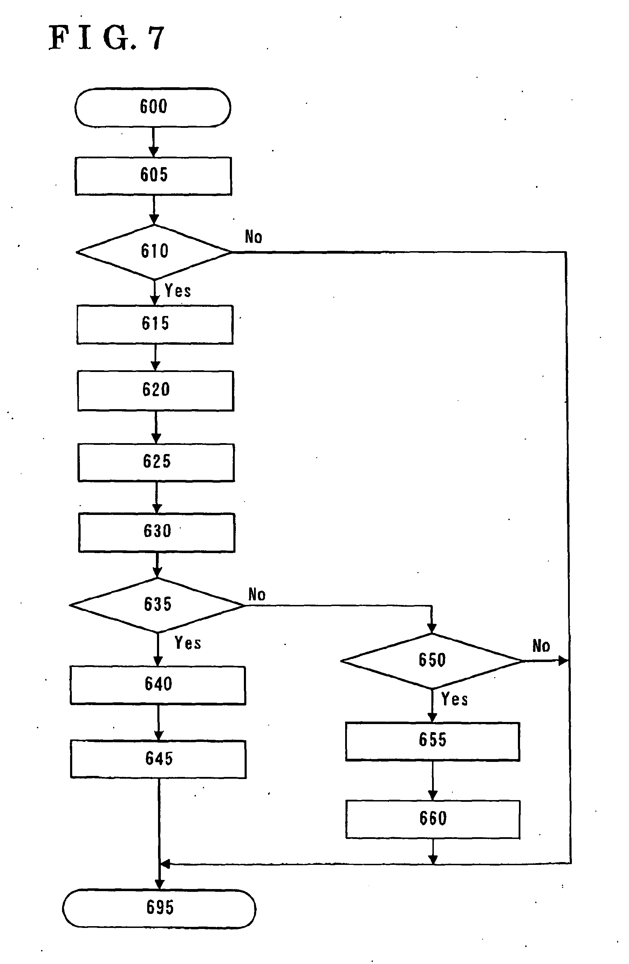

FIG. 7 illustrates a flowchart for explaining a routine for judging whether or not the adjusting operation is required;

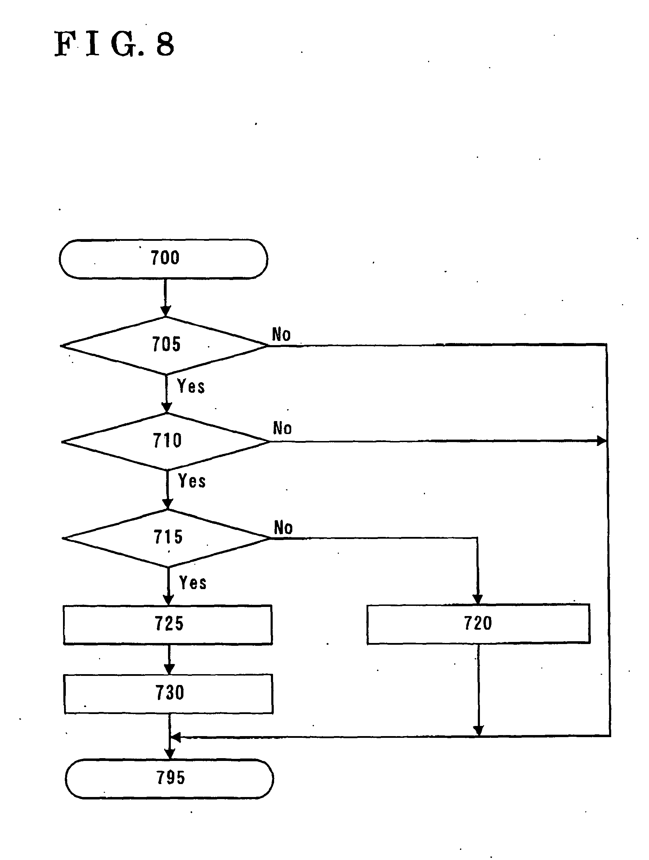

FIG. 8 illustrates a flowchart for explaining an adjusting operation routine performed by the CPU shown in FIG. 1; and

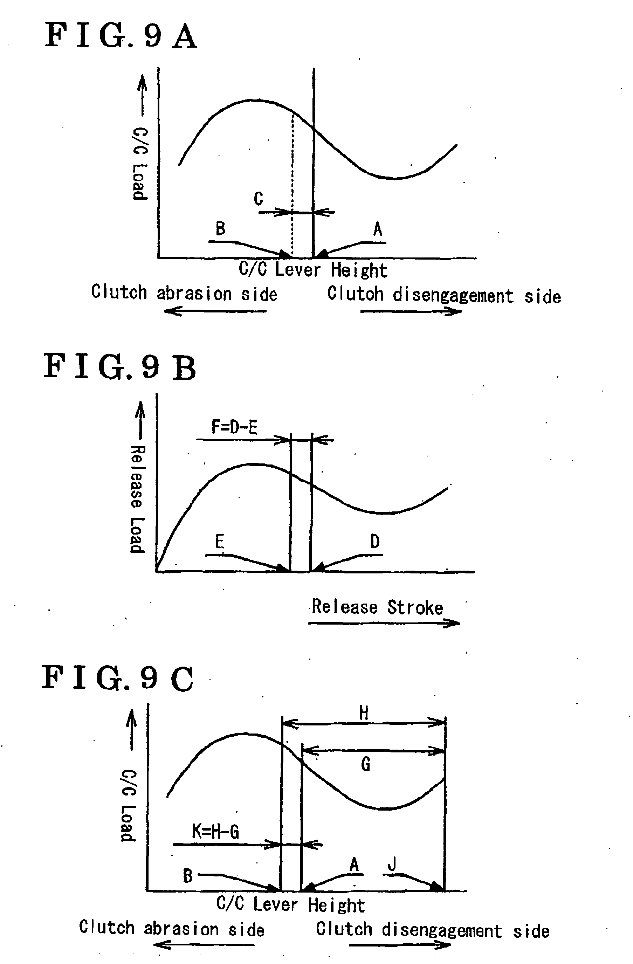

FIGS. 9 ( A ), ( B ), and ( C ) are graphs for explaining principles for determining an abrasion amount of a clutch disc applicable for the present invention.

### DETAILED DESCRIPTION OF THE INVENTION

A preferred embodiment of the present invention will be described hereinbelow in detail with reference to the accompanying drawings.

Referring to FIG. 1, a clutch control apparatus according to the embodiment of the present invention is provided with a friction clutch 20 (i.e. a clutch assembly), an actuator 30 for operating the friction clutch 20 disposed between an engine 10 as a driving power source and a transmission 11, and a clutch control circuit 40. The clutch control circuit 40 outputs a driving command signal to the actuator 30 so as to control the operation of the actuator 30 based upon the signal.

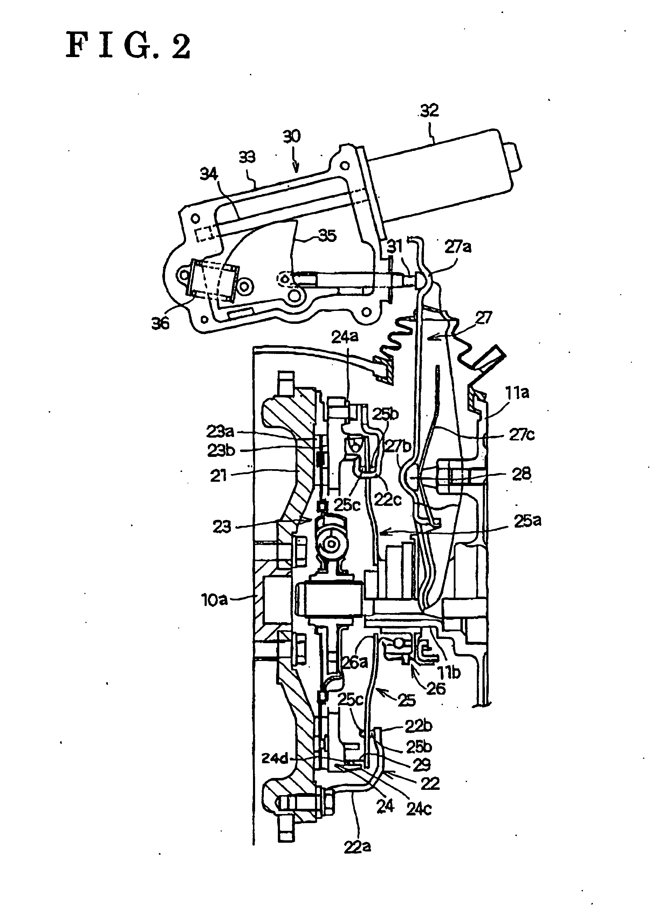

The friction clutch 20 (i.e. the clutch assembly) includes a fly wheel 21, a clutch cover 22, a clutch disc 23, a pressure plate 24, a diaphragm spring 25. Referring to Fig. 2, the friction clutch 20 further includes a release bearing 26, a release fork 27, a pivot supporting member 28 fixed to a transmission case 11a, and an adjustment wedge member 29. The pressure plate 24, the diaphragm spring 26, and the release fork 27 are integrally assembled with the clutch cover 22 so that these components can be referred to as a clutch cover assembly.

The cast-iron fly wheel 21 is in a circular disc shaped structure and is fixedly connected to a crankshaft 10a (an output shaft of the driving power source) of the engine 10 by means of bolts so as to integrally rotate with the crank shaft 10a.

The clutch cover 22 is in an approximately cylindrical structure and is provided with a cylindrical portion 22a, a flange portion 22b formed at an inner peripheral side of the cylindrical portion 22a, and plural holding portions 22c formed at the inner peripheral edge of the flange portion 22b. The plural holding portions 22c are arranged with equal spaces therebetween in a circumferential direction. The clutch cover 22 is fixedly connected to the fly wheel 21 at an outer peripheral portion of the cylindrical portion 22a by means of bolts so as to be rotated integrally with the fly wheel 21. The clutch cover 22 is further provided with a pressure plate stopper 22d (illustrated in FIG. 4 (A)) inwardly bent at the cylindrical portion 22a

The clutch disc 23 is a friction plate for transmitting driving power of the engine 10 to the transmission 11. The clutch disc 23 is disposed between the fly wheel 21 and the pressure plate 24. A central portion of the clutch disc 23 is spline-engaged with an input shaft (not shown) of the transmission 11 so that the clutch disc 23 can be moved in an axial direction thereof. Clutch facings 23a, 23b (frictional member) are fixed at outer peripheral portions of both surfaces of the clutch disc 23 by means of rivets.

The pressure plate 24 applies a pushing force thereof to the clutch disc 23 in a direction of the fly wheel 21 so as to frictionally engage the clutch disc 23 with the fly wheel 21. Therefore, the pressure plate 24, the clutch disc 23 and the fly wheel 21 can be integrally rotated. The pressure plate 24 is connected to the clutch cover 22 via a strap 24a so as to be rotated in response to the rotation of the clutch cover 22.

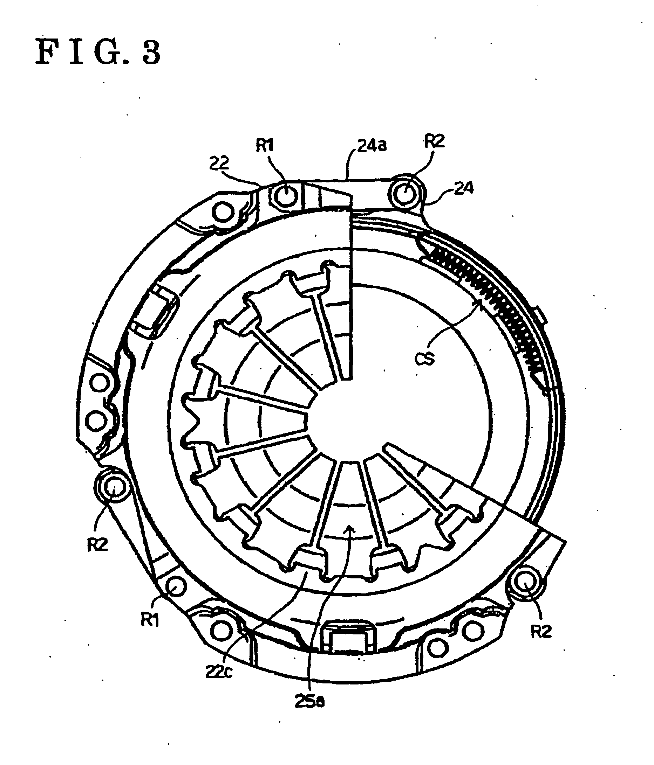

The strap 24a is formed by plural thin accumulated leaf springs. Referring to FIG. 3, one end of the strap 24a is secured to an outer peripheral portion of the clutch cover 22 by means of a rivet R1 and the other end thereof is secured to a projection provided on an outer peripheral portion of the pressure plate 24 by means of a rivet R2. Therefore, the strap 24a applies biasing force to the pressure plate 24 so as to move the pressure plate 24 away from the fly wheel 21.

As illustrated in FIGS. 2 and 4, a contact portion 24b is provided at an outermost peripheral portion of the pressure plate 24. The contact portion 24b of the pressure plate 24 becomes in contact with the pressure plate stopper 22d when the pressure plate 24 is moved by a predetermined axial distance in a direction of the diaphragm spring 25. A guide portion 24c is defined at an inner peripheral side of the contact portion 24b and is arranged upright relative to the diaphragm spring 25. Further, as illustrated in FIG. 5, saw-toothed taper portions 24d are defined at an inner peripheral side of the guide portion 24c and are arranged upright relative to the diaphragm spring 25.

The diaphragm spring 25 is formed by twelve elastic plate members 25a (hereinafter, referred to as lever members 25a) radially arranged along the inner periphery of the cylindrical portion 22a of the clutch cover 22. Each lever member 25a is held by the holding portion 22c via a pair of ring shaped fulcrum members 25b, 25c disposed at both sides in an axial direction of each lever member 25a. Therefore, each lever member 25a can be pivotably moved relative to the clutch cover 22 via the fulcrum members 25b, 25c.

As illustrated in FIG. 5, an adjustment wedge member 29 (i.e. one of an adjusting means) is disposed between the taper portions 24d of the pressure plate 24 and an outer peripheral portion of the diaphragm spring 25. The adjustment wedge member 29 is in a ring shaped structure having a wedge side taper portion 29a. As illustrated in FIG. 5, the wedge side taper portion 29a possesses substantially the same shape as the one of the taper portion 24d of the pressure plate 24 such that the wedge side taper portion 29a and the taper portion 24d comes in contact with each other at a taper surface TP. The adjustment wedge member 29 is provided with a flat surface at the other side thereof. The adjustment wedge member 29 is disposed between the pressure plate 24 and the diaphragm spring 25 for transmitting an operating force from the diaphragm spring 25 to the pressure plate 24.

Defined are notches 29b at appropriate positions of the adjustment wedge member 29 at the side of the diaphragm spring 25. Defined are through-holes 24e defined at appropriate positions of the taper portions 24d of the pressure plate 24. A coil spring CS extends between the notch 29b and the through-hole 24e with both ends thereof engaged thereto. Therefore, the pressure plate 24 and the adjustment wedge member 29 are biased relative to each other in a direction in which a peak portion of each taper portion 24d comes close to a peak portion of each wedge side taper portion 29a.

The release bearing 26 is supported to be slidably movable relative to a holding sleeve 11b supported by the transmission case 11a enclosing an outer periphery of the input shaft of the transmission 11 and is provided with a force point portion 26a for pushing an inner end portion of each lever member 25a, i.e. a central side of the diaphragm spring 25, towards the fly wheel 21.

The release fork (i.e. a fork member) 27 is employed for slidably moving the release bearing 26 in an axial direction thereof in response to an operation of the actuator 30. One end of the release fork 27 is in contact with the release bearing 26 and the other end thereof is in contact with a tip end portion of a rod 31 of the actuator 30 via a contact portion 27a. The release fork 27 is assembled at the pivot supporting member 28 by a spring 27c fixed to the transmission case 11a. The release fork 27 is further designed to be pivotably moved with the pivot supporting member 28 as a fulcrum via an approximately central portion 27b of the release fork 27.

The actuator 30 is provided with a DC motor 32 for moving the rod 31 in the forward and rearward directions and a housing 33 for supporting the DC motor 32. The actuator 30 is mounted in the vehicle via the housing 33 fixed to the vehicle. The housing 33 houses a rotational shaft 34, a sector gear 35, and an assist spring 36. The rotational shaft 34 is operated by the DC motor 32 for its rotation. The sector gear 35 being in a sector-shaped structure from a side view is supported in the housing 33 so as to be pivotablly rotated.

The rotational shaft 34 is provided with a worm portion being engaged with a circular arc-shaped portion of the sector gear 35. A base end portion (the other end portion of the tip end portion being in contact with the release fork 27) of the rod 31 is rotatably supported by the sector gear 35. Therefore, the sector gear 35 is rotated in response to a rotation of the DC motor 32 so as to move the rod 31 in the forward and rearward directions relative to the housing 33.

The assist spring 36 is preset to be compressed when the sector gear 35 is within a pivotally movable range thereof. One end of the assist spring 36 is engaged with a rear end portion of the housing 33. The other end thereof is engaged with the sector gear 35. Therefore, the assist spring 36 biases the sector gear 35 in a clockwise direction when the sector gear 35 is rotated beyond a predetermined angle in the clockwise direction. That is, the assist spring 36 biases the rod 31 in a right direction in Fig. 2 and assists an operation of the DC motor 32 for moving the rod 31 in the right direction.

Referring to FIG. 1, the clutch control circuit 40 is provided with a microcomputer (CPU) 41, interfaces 42, 43, 44, an electric power source circuit 45, and a driving circuit 46. The CPU 41 (i.e. a controlling means) houses a ROM memorizing programs (described later) and maps (described later) and a RAM.

The interface 42 is connected to the CPU 41 via a bus and is further connected to a shift lever load sensor 51, a vehicle speed sensor 52 for detecting a vehicle speed V, a gear position sensor 53 for detecting a shift stage actually selected by the transmission 11, a transmission input shaft rotational speed sensor 54 for detecting a rotational number of the input shaft of the transmission 11, and a stroke sensor 37. The shift lever load sensor 51 detects load generated upon operation of a shift lever (not shown) of the transmission 11, i.e. for detecting a shift lever load, The stroke sensor 37 detects a stroke ST of the rod 31 by detecting an angle of the pivotably rotating sector gear 35. The interface 42 hence supplies a signal detected by each sensor to the CPU 41.

The interface 43 is connected to the CPU 41 via a bus and is further connected to an engine control unit 60 for mutually communicating each other. The engine control unit 60 is connected to a throttle opening degree sensor 55 and an engine rotational speed sensor 56 so as to output a signal detected by each sensor 55, 56 to the CPU 41.

The interface 44 is connected to the CPU 41 via a bus and is further connected to an input terminal of an OR circuit 45a of the electric power source circuit 45 and the driving circuit 46. The interface 44 transmits predetermined signals based upon a command from the CPU 41.

The electric power source circuit 45 is provided with a power transistor Tr and a constant voltage circuit 45b. A base portion of the power transistor Tr is connected to an output end of the OR circuit 45a. A collector of the power transistor Tr is connected to a plus terminal of a battery 70 mounted in the vehicle and an emitter thereof is connected to the constant voltage circuit 45b and the driving circuit 46. Therefore, electric power is supplied to each of them from the power transistor Tr when the power transistor Tr is ON. The constant voltage circuit 45b is employed for converting a battery voltage to a constant voltage (5V) and for supplying the electric power to the CPU 41 and the interfaces 42, 43, 44 which all are connected to the constant voltage circuit 45b. The other input terminal of the OR circuit 45a is connected to one end of an ignition switch 71 manually operated to be turned ON and OFF by the driver. The other end of the ignition switch 71 is connected to the plus terminal of the battery 70. The one end of the ignition switch 71 is also connected to the interface 42 so that the CPU 41 can detect the condition of the ignition switch 71.

The driving circuit 46 is provided with four switching elements (not shown) turned ON or OFF by command signal from the interface 44. The switching elements forming a known bridge circuit are selectively controlled to be under a conducted condition for a controlled conducting period. Therefore, the switching elements can supply a predetermined electric current to the DC motor 32 in a predetermined direction and in a reverse direction thereof.

The engine control unit 60 is provided with a microcomputer (not shown) as a main element thereof and is employed for controlling fuel consumption of the engine 10 and an ignition timing threof. As described above, the engine control unit 60 is connected to the throttle opening degree sensor 55 for detecting the throttle opening degree TA of the engine 10 and the engine rotational speed sensor 56 for detecting the rotational number N_{E} of the engine 10. Further, the engine control unit 60 performs an inputting process of the signal of each sensor and a calculating process based upon the signal.

Regarding the above described clutch control apparatus according to the embodiment of the present invention, the actuator 30 automatically performs the engagement and disengagement operations of the clutch 20 in substitution for the manual clutch pedal operation by the driver. That is, the engagement and disengagement operations of the clutch 20 are performed, for example, under the following three conditions; (1) when the CPU 41 detects that the vehicle state is shifting from a vehicle running state to a vehicle stationary state, e.g. when the rotational speed of the input shaft 11a of the transmission 11 becomes equal to or smaller than a predetermined value, (2) when the CPU 41 detects that the load detected by the shift lever load sensor 51 becomes equal to or greater than a predetermined value, e.g. when the intention of the driver to change a shift stage is recognized, and (3) when the CPU 41 detects that an accelerator pedal (not shown) is depressed while the vehicle is in the stationary state.

Next, an engagement operation of the clutch 20 is described below, wherein the driving power of the engine 10 can be transmitted to the transmission 11. A predetermined electric current is first supplied to the DC motor 32 from the driving circuit 46 based upon the command signal from the clutch control circuit 40 so that the DC motor 32 is activated for its rotation. Therefore, the sector gear 35 is rotated in a counterclockwise direction and the rod 31 is moved in the left direction in FIG. 2.

In the meantime, the release bearing 26 is applied with force by the diaphragm spring 25 in a direction to be moved away from the fly wheel 21, i.e. in the right direction in FIG. 2. The force is transmitted to the release fork 27 via the release bearing 26 so that the release fork 27 is applied with a force to be pivotablly moved with the pivot-supporting member 28 as the fulcrum in the counterclockwise direction in FIG. 2. Therefore, the central portion of the diaphragm spring 25 is displaced in the direction to be away from the fly wheel 21.

In this case, the diaphragm spring 25 is pivotally moved, i.e. the posture of the diaphragm spring 25 is varied, with a center on the fulcrum members 25b, 25c and pushes the adjustment wedge member 29 being in contact with the outer peripheral portion of the diaphragm spring 25 towards the fly wheel 21. The pressure plate 24 is hence applied with a force to be moved towards the fly wheel 21 via the taper portions 24d so that the clutch disc 23 is gripped between the pressure plate 24 and the fly wheel 21. Therefore, the clutch disc 23 is integrally rotated with the fly wheel 21 such that the driving power from the engine 10 can be transmitted to the transmission 11.

Next, a disengagement operation of the clutch 20 is described below, wherein the driving power of the engine 10 cannot be transmitted to the transmission 11. The sector gear 35 is rotated in a clockwise direction in FIG. 2 in response to the operation of the DC motor 32. The rod 31 is then moved in the right direction in FIG. 2 and applies a force to the release fork 27 to be moved in the right direction in Fig. 2 via the contact portion 27a. The release fork 27 is then pivotably rotated in the clockwise direction in FIG. 2 with the supporting point of the pivot supporting member 28 as the fulcrum. Therefore, the release bearing 26 is moved towards the fly wheel 21.

The diaphragm spring 25 is applied with a force to be moved towards the fly wheel 21 at the force point portion 26a so as to be pivotably rotated with a center on the fulcrum members 25b, 25c. The outer peripheral portion of the diaphragm spring 25 is hence moved away from the fly wheel 21. Therefore, the force pushing the pressure plate 24 towards the fly wheel 21 via the adjustment wedge member 29 is decreased. The pressure plate 24 is connected to the clutch cover 22 via the strap 24a and is always biased to be moved away from the fly wheel 21. The pressure plate 24 is hence slightly separated from the clutch disc 23 by the biasing force. Therefore, the driving power of the engine 10 can not be transmitted to the transmission 11.

Further, when the clutch 20 is operated to be disengaged during the vehicle being under a normal driving condition, the stroke ST of the rod 31 is controlled to be a predetermined stroke value ST0, thereby enabling to maintain a predetermined distance Y between the contact portion 24b of the pressure plate 24 and the pressure plate stopper 22d of the clutch cover 22 such that the contact portion 24b does not come in contact with the pressure plate stopper 22d, as illustrated in FIG. 4 (A).

Next, an operation for compensating for the abrasion of the clutch facings 23a, 23b is described below with reference to flow charts illustrated in FIGS. 6, 7, and 8.

The abrasion compensating operation (an adjusting operation) of the clutch disc 23 commences under a condition that the abrasion of the clutch facings 23a, 23b has not been progressed, for example immediately after the abrasion compensating operation was performed, upon a shipment from a factory, or immediately after the clutch disc 23 was replaced with a new one.

Referring to Fig. 6, the CPU 41 repeatedly performs an adjusting operation control routine at a predetermined time basis when an electric power has been supplied to the CPU 41. The CPU 41 starts the routine from step 500 and proceeds to step 505 for judging whether or not the ignition switch 71 has been turned off, i.e. for judging whether or not a rotational number of the engine 10 (i.e. the driving power source) is substantially zero. The CPU 41 can estimate that the rotational number of the engine 10 is substantially zero when the engine 10 has rotated at a small RPM such that the engine rotational speed sensor 56 can not detect the rotation of the engine 10. When the ignition switch 71 is judged to be off at step 505, an affirmative judgment (YES) is obtained at step 505 and the CPU 41 proceeds to step 510. On the other hand, when the ignition switch 71 is not judged to be off at step 505, a negative judgment (NO) is obtained at step 505 and the CPU 41 proceeds to step 595 so as to terminate the adjusting operation control routine. When the engine 10 then becomes inactive and the vehicle speed becomes substantially zero, the clutch 20 is shifted to the engaged condition and the vehicle 11 is parked in a state where a predetermined shift gear is engaged. If the vehicle is provided with a transmission in which a shift stage can be automatically changed, it is preferable that the transmission 11 is controlled to establish a shift stage apart from a neutral shift stage therein when the CPU 41 proceeds to step 595. In this case, the vehicle can be parked in the state where a predetermined shift stage is established.

At step 510, the CPU 41 judges whether or not the vehicle speed V is substantially zero. More particularly, the CPU 41 judges whether or not the vehicle speed V is substantially zero based upon the signal outputted from the vehicle speed sensor 52. When the vehicle speed V is judged to be substantially zero, the affirmative judgment (YES) is obtained at step 510 and the CPU 41 proceeds to step 515. On the other hand, when the vehicle speed V is not judged to be substantially zero, the negative judgment (NO) is obtained at step 510 and the CPU 41 proceeds to step 595 so as to temporarily terminate the adjusting operation control routine.

At step 515, the CPU 41 judges whether or not an adjusting operation request flag FADJ is set at "1". In a later-described routine for judging whether or not the adjusting operation is required, the adjusting operation request flag FADJ is set at "1" when the CPU 41 judges that the adjusting operation is necessary, i.e. when the CPU 41 judges that the distance between the diaphragm spring 25 and the pressure plate 24 is changed by the adjustment wedge member 29. On the other hand, the adjusting operation request flag FAGJ is set at "0" when the CPU 41 judges that the above described adjusting operation is not necessary. When the CPU 41 judges that the adjusting operation is necessary, the flag FADJ is set at "1". In this case, the affirmative judgment (YES) is obtained at step 515 and the CPU 41 proceeds to step 525 for performing an adjusting operation routine. On the other hand, when the flag FADJ is set at "0", the negative judgment (NO) is obtained at step 515 and the CPU 41 proceeds to step 520 for performing the routine for judging whether or not the adjusting operation is required.

Referring to the flowchart illustrated in FIG. 7, next description will be given for explaining the operation for judging whether or not the adjusting operation is required.

The CPU 41 starts the routine from step 600 and proceeds to step 605 for applying a full engagement electric current value IMKGO to an electric current value IM to be supplied to the DC motor 32 so as to fully engage the clutch 20, i.e. so as to integrally rotate the clutch disc 23 with the fly wheel 21. Therefore, the rod 31 is moved in the left direction in FIG. 2 in response to the rotation of the DC motor 32 so that the clutch disc 23 is gradually engaged with the fly wheel 21.

The CPU 41 then proceeds to step 610 for judging whether or not the clutch 20 is under the fully engaged condition. More specifically, the CPU 41 judges that the clutch 20 is under the fully engaged condition when a sufficient time has passed since the electric current value IM to be supplied to the DC motor 32 has been set at the full engagement electric current value IMKGO or when the stroke ST detected by the stroke sensor 37 has not been changed for at least a predetermined period of time. When the CPU 41 judges that the clutch 20 is not under the fully engaged condition yet, a negative judgment (NO) is obtained at step 610 so that the CPU 41 proceeds to step 695 for temporarily terminating the routine.

As described above, the processes at steps 605 and 610 are then repeatedly performed at a predetermined clock cycle. When the condition that the value of the flag FADJ is set at "0" and the engine 10 under the stationary condition is continued for a period of time required for engaging the clutch 20, the affirmative judgment (YES) is obtained at step 610 so that the CPU 41 proceeds to step 615. If the engine 10 is driven before the affirmative judgment (YES) is obtained at step 610, the DC motor 32 is supplied with electric current corresponding to each condition under a routine (not shown). Therefore, an appropriate clutch engagement control can be performed.

At step 615, values of nine buffers A(2) through A(10) are updated. More specifically, assuming that "n" represents natural numbers from 1 to 9, the buffer A(n) is sequentially shifted to a buffer A(n+1). The buffer A(10) before being updated is deleted.

The CPU 41 then proceeds to step 620 for updating a buffer A(1) with a current stroke ST actually detected by the stroke sensor 37. The CPU 41 then proceeds to step 625 for calculating a simple average value of the ten buffers A(1) through A(10) and for applying the simple average value to a fully engagement position KKI. The CPU 41 then proceeds to step 630 to set the electric current value IM at zero so as to stop the electric current supply to the DC motor 32.

At step 635, the CPU 41 judges whether or not a value of a counter N is smaller than a predetermined value T1. According to the embodiment of the present invention, the predetermined value T1 is set to be 10. As described later, the counter N is set to be zero when the abrasion compensating operation (i.e. the adjusting operation) of the clutch disc 23 was performed, when is shipped from the factory, or when the clutch disc 23 is replaced with a new one. At this point, the counter N is set to be zero such that the affirmative judgment (YES) is obtained at step 635 and the CPU 41 proceeds to step 640 so as to set the fully engagement position KKI as an adjusting reference position AKI. The CPU 41 proceeds to step 645 for increasing the value of the counter N by "1". The CPU 41 then proceeds to step 695 so as to terminate the routine for judging whether or not the adjusting operation is required.

The above-described routine is then repeatedly performed by the CPU 41 at the predetermined time basis. Therefore, the adjusting reference position AKI is updated at step 640 and the value of the counter N is increased by "1" at step 645.

Upon repeatedly performing the above described operation, the values of the buffers A(1) through A(10) are sequentially updated and the adjusting reference position AKI is updated. Further, the value of the counter N is gradually increased. When the process at step 635 is performed again in a state where the value of the counter N is set at the predetermined value T1 (in this case, the predetermined value T1 is 10) at step 645, the negative judgment (NO) is obtained at step 635 and the CPU 41 proceeds to step 650. At step 650, the CPU 41 judges whether or not a difference between the adjusting reference position AKI and the fully engagement position KKI (or an absolute value of the difference therebetween) is greater than a predetermined threshold value L (i.e. a predetermined abrasion amount). At this point, the abrasion of the clutch facings 23a and 23b has not progressed yet such that the CPU 41 judges that the difference between the adjusting reference position AKI and the fully engagement position KKI (or an absolute value thereof) is smaller than the predetermined threshold value L. Therefore, the negative judgment (NO) is obtained at step 650 and the CPU 41 proceeds to step 695 for terminating the routine.

While steps 605 through 625 are repeatedly performed, the fully engagement position KKI is updated to be a value corresponding to the extent of the abrasion of the clutch facings 23a, 23b. The value of the counter N is maintained to be greater than the predetermined value T1. Therefore, the negative judgment (NO) is obtained at step 635 so that the CPU 41 proceeds to step 650. In this case, the step 640 is not performed. The adjusting reference position AKI is hence maintained at a value immediately after the adjusting operation, at a value immediately after the shipment from the factory, or at a value immediately after the clutch disc 23 was replaced with a new one.

The clutch facings 23a, 23b are abraded through the repeatedly performed engagement and disengagement operations of the clutch 20 while the vehicle has been driven for a long period of time. The difference between the adjusting reference position AKI and the fully engagement position KKI then becomes greater than the predetermined threshold value L. In such a case, the affirmative judgment (YES) is obtained at step 650 and the CPU 41 proceeds to step 655. At step 655, the CPU 41 sets a value of an adjusting operation request flag FADJ at "1".

At step 660, the difference between the adjusting reference position AKI and the fully engagement position KKI is set as an abrasion amount X of the clutch facings 23a, 23b, i.e. a required adjusting amount. The CPU 41 then proceeds to step 695 so as to terminate the routine. As described above, the value of the adjusting operation request flag FADJ is set at "1" when the abrasion of the clutch facings 23a, 23b has been progressed to a certain degree.

According to the embodiment of the present invention, the fully engagement position KKI is updated when the engine 10 is under the stationary condition. Therefore, vibration of the engine 10 is not applied to the clutch 20 and the fully engagement position KKI can be determined with high accuracy. Further, according to the embodiment of the present invention, the fully engagement position KKI is determined by averaging the strokes ST at the ten fully engagement operations of the clutch 20 by employing the buffers A(1) through A(10). Therefore, the fully engagement position KKI can be determined with relatively high precision. Further, the fully engagement position KKI is determined based upon the average value of the strokes ST during the clutch 20 being fully engaged such that the fully engagement position KKI can be determined with relatively high precision.

Next, the following description will be given for explaining an operation for actually performing the adjusting operation with reference to a flow chart illustrated in FIG. 8. The flow chart illustrated in FIG. 8 represents the process at step 525 for performing the adjusting operation.

The operation is described assuming that all conditions for performing steps 705 through 715 for performing the adjusting operation are satisfied. The CPU 41 performs a routine illustrated in Fig. 8 at a predetermined period of time basis. The CPU 41 starts the routine from step 700 at a predetermined timing and proceeds to step 705. At step 705, the CPU 41 judges whether or not the value of the adjusting operation request flag FADJ is set at "1" or not. This process at step 715 is employed for performing the adjusting operation only when the adjusting operation has been required.

In this case, the value of the adjusting operation request flag FADJ has been assumed to be set at "1". Therefore, the affirmative judgment (YES) is obtained at step 705 so that the CPU 41 proceeds to step 710 for judging whether or not the clutch disc 23 is under the disengagement condition. When the clutch 20 is maintained under the engaged condition, the adjusting operation cannot be performed.

In this case, the clutch disc 23 has been assumed to be under the disengaged condition. Therefore, the affirmative judgment (YES) can be obtained at step 710 and the CPU 41 proceeds to step 715 for judging whether or not the stroke ST is substantially equal to a sum of a stroke ST0, the abrasion amount X, and the predetermined distance Y. As explained in FIG. 4 ( A ), the stroke ST0 represents the stroke ST for disengaging the clutch 20 under the normal vehicle driving. The predetermined distance Y represents the distance between the contact portion 24b of the pressure plate 24 and the pressure plate stopper 22d of the clutch cover 22 during the clutch 20 being disengaged under the normal vehicle driving.

According to the embodiment of the present invention, the moving distance of the rod 31, i.e. the stroke ST detected by the stroke sensor 37, is designed to be substantially equal to each moving distance of the pressure plate 24 and the outer peripheral portion of the diaphragm spring 25. Alternatively, each moving distance of the rod 31, the pressure plate 24, and the outer peripheral portion of the diaphragm spring 25 can be designed to be mutually proportional at a predetermined ratio. In this case, a right side member at step 716 will be ST0 + ky·Y + kx·X. The symbols "ky" and "kx" are predetermined constant values. When the stroke ST is equal' to the value denoted with ST0 + ky·Y, the contact portion 24b becomes in contact with the pressure plate stopper 22d. When the stroke ST is equal to the value denoted with ST0 + ky·Y + kx·X, the distance between the outer peripheral portion of the diaphragm spring 25 and the diaphragm spring-side end portion of the adjustment wedge member 29 before being applied with the abrasion compensating operation will become equal to the abrasion amount X.

At this point, the clutch 20 is under the normal disengaged condition such that the stroke ST is equal to the stroke ST0. Therefore, the negative judgment (NO) is obtained at step 715 and the CPU 41 proceeds to step 720. At step 720, an adjusting electric current value IMADJ is applied to the electric current value IM. Therefore, the stroke ST gradually approaches a judgment value (ST0 + X + Y). The program then proceeds to step 795 for terminating the routine.

The CPU 41 then repeatedly performs the routine at the predetermined time basis. Therefore, at steps 705 and 710, the CPU 41 monitors whether or not the conditions for performing the adjusting operations have been satisfied. At step 715, the CPU 41 monitors whether or not the stroke ST has reached the judgment value (ST0 + X + Y).

As the predetermined period of time passes, the posture of the diaphragm spring 25 is changed from the posture illustrated in FIG. 4 (A) to the posture illustrated in FIG. 4 (B). That is, the central portion of the diaphragm spring 25 is applied with the force to be moved towards the fly wheel 21 via the force point portion 26a. The diaphragm spring 25 is pivotally moved with a center on the fulcrum members 25b, 25c and the edge portion at the outer peripheral portion of the diaphragm spring 25 is gradually moved away from the pressure plate 24. Therefore, the contact portion 24b comes into contact with the pressure plate stopper 22d of the clutch cover 22.

In this case, the stoke ST is equal to a value (ST + Y) being smaller than the judgment value (ST0 + X + Y). Therefore, the negative judgment (NO) is obtained at step 715 and the CPU 41 proceeds to step 720. In this case, the adjusting electric current value IMADJ is continuously supplied to the DC motor 32 so that the posture of the diaphragm spring 25 is further varied. The contact portion 24b has been in contact with the pressure plate stopper 22d of the clutch cover 22 so as to limit the further axial movement of the pressure plate 24. Therefore, the distance between the outer peripheral portion of the diaphragm spring 25 and the taper portions 24d of the pressure plate 24 becomes greater, The adjustment wedge member 29 is hence rotated by the biasing force of the coil springs CS and the peak point of each taper portion 29a of the adjustment wedge member 29 becomes in contact with the peak point of each taper portion 24a of the pressure plate 24. Therefore, the flat portion of the adjustment wedge member 29 follows the movement of the outer peripheral portion of the diaphragm spring 25.

As the predetermined period of time passes and the stroke ST reaches the judgment value (ST0 + X + Y), the affirmative judgment (YES) is obtained at step 715 and the CPU 41 proceeds to step 725 for setting the value of the adjusting operation request flag FADJ at "0". At this point, the adjusting operation is terminated. At step 730, the value of the counter N is set at "0" for updating the adjusting reference position AKI at a new value. The CPU 41 then proceeds to step 795 for terminating the routine. Hereinafter, electric current corresponding to each vehicle driving condition is supplied to the DC motor 32 for performing an appropriate clutch control.

As described above, the distance between the diaphragm spring 25 and the pressure plate 24 becomes greater in accordance with the abrasion amount X.

Therefore, the diaphragm spring 25 under the engaged condition of the clutch disc 23 can be returned to an initial position, i.e. to a set position of the diaphragm spring 25 when the clutch disc 23 is new with no abrasion. In this case, the load can be effectively prevented from fluctuating upon the clutch operation.

When the adjusting operation routine illustrated in FIG. 8 is performed, any one of the conditions for performing the adjusting operation may not be satisfied. For example, the CPU 41 may not judge at step 705 that the adjusting operation request flag FADJ is set at "1". Further, the CPU 41 may not judge at step 710 that the clutch 20 is under the disengaged condition. In this case, the negative judgment (NO) is obtained at step 705 or 710 and the CPU 41 proceeds to step 795 so as to terminate the adjusting operation routine. In this case, the electric motor 32 is then supplied with an appropriate electric current corresponding to each vehicle driving condition and a clutch operation can be appropriately controlled.

According to the embodiment of the present invention, as illustrated in Fig. 9(A), the abrasion amount X is determined as the difference (a distance C) between the adjusting reference position AKI (point A) and the fully engaging position KKI (point B). However, as illustrated in Fig. 9(B), the abrasion amount X can be determined by directly detecting a variation F from an initial position D, at which the engagement of the clutch disc 23 commences and the abrasion of the clutch disc 23 is generated, to a position E, at which the abrasion has been progressed. Further, as illustrated in Fig. 9(C), the abrasion amount X can be determined by detecting a difference K between a stroke amount G and a stroke amount H. The stroke amount G is a distance between a fully engaged point A (in the case that there is no abrasion or immediately after the adjusting operation) and a position J predetermined on a stroke of the clutch cover 22. The stroke amount H is a distance between a fully engaged point B (in the case that the abrasion of the clutch 20 has been progressed) and the predetermined position J.

As described above, in the clutch control apparatus according to the embodiment of the present invention, the adjustment wedge member 29 changes the axial clearance between the diaphragm spring 25 and the pressure plate 24 only when the engine 10 has been inactive in which the clutch cover 22 is unlikely applied with vehicle vibration. Therefore, when the actuator 30 is actually activated, the vehicle vibration due to the rotation of the crankshaft of the engine 10 is not transmitted to the actuator 30 and the adjustment wedge member 29. Therefore, the operation of the adjustment wedge member 29 can be effectively prevented from being affected by the vehicle engine vibration such that the clutch abrasion can be effectively compensated with relatively high precision.

There are various modifications being applicable for the present invention. For example, an oil pressure type actuator can be employed in substitution for the actuator 30 provided with the DC motor 32. In this case, the rod 31 can be moved in the forward and rearward directions by oil pressure controlled by an electromagnetic valve.

Further, according to the above-described embodiment of the present invention, the adjusting operation can be performed by driving the actuator 30 and by correcting the posture of the diaphragm spring 25 only when the clutch cover 22 is unlikely to resonate in response to the vehicle vibration. Alternatively, the adjusting operation can be performed by correcting the posture of the diaphragm spring 25 when other predetermined conditions are satisfied. Still further, the clutch control circuit 40 can be formed integrally with the actuator 30 or separately therefrom.

Further, according to the embodiment of the present invention, the adjustment wedge member 29 is used as the adjusting means. Alternatively, a different type of adjusting member can be used as the adjusting means. The adjusting member can perform the first half of the adjusting operation when the adjusting member is set to be most proximal to a first position for normally performing the disengagement operation within a range in which the adjusting operation is not performed and is shifted in a direction of a disengagement side by a predetermined stroke. The adjusting member can then perform the second half of the adjusting operation when the adjusting member is shifted from the aforementioned first position to a second position for normally performing the engagement operation within the range in which the adjusting operation is not performed.

The clutch control apparatus is characterized in that a controlling means controls operation of an actuator for changing an axial spacing between a diaphragm spring and a pressure plate during a driving power source being inactive when the controlling means judges that the axial spacing between the diaphragm spring and the pressure plate is needed to be changed by an adjusting means.

## Claims

1. A clutch control apparatus comprising:
a clutch assembly including
a fly wheel (21) integrally rotatable with an output shaft (10a) of a driving power source;
a clutch disc (23) frictionally engageable between a pressure plate (24) and the fly wheel (21) to establish a frictional driving connection
a diaphragm spring (25) capable of changing the frictional driving connection of the clutch disc (23) when the diaphragm spring (25) is applied with a force by an actuator (30);
and an adjusting means (29) disposed between the pressure plate (24) and the diaphragm spring (25) for transmitting an operating force from the diaphragm spring (25) to the pressure plate (24) and'for varying an axial spacing between the diaphragm spring (25) and the pressure plate (24) to compensate for wear of the clutch disc (23);
and a controlling means (41) for controlling operation of the actuator (30),
**characterized in that** the controlling means (41) controls the operation of the actuator (30) for changing the axial spacing between the diaphragm spring (25) and the pressure plate (24) during a driving power source being inactive when the controlling means (41) judges that the axial spacing between the diaphragm spring (25) and the pressure plate (24) is needed to be changed by the adjusting means (29),

2. A clutch control apparatus according to claim 1, wherein the controlling means (41) judges whether or not the axial spacing between the diaphragm spring (25) and the pressure plate (24) is needed to be changed by the adjusting means (29) when the driving power source is inactive.

3. A clutch control apparatus according to any one of claims 1 and 2, wherein the controlling means (41) controls the operation of the actuator (30) for changing the axial spacing between the diaphragm spring (25) and the pressure plate (24) by the adjusting means (29) when a rotational number of the driving power source is substantially zero.

4. A clutch control apparatus according to any one of claims 1, 2, and 3, wherein the controlling means (41) controls the operation of the actuator (30) for changing the axial spacing between the diaphragm spring (25) and the pressure plate (24) by the adjusting means (29) when a vehicle speed is substantially zero.

5. A clutch control apparatus according to any preceding claim, wherein the controlling means (41) controls the operation of the actuator (30) for changing the axial spacing between the diaphragm spring (25) and the pressure plate (24) by the adjusting means (29) until the time when the clutch disc (23) is frictionally engaged with the fly wheel (21) from the time when the driving power source stops.

6. A clutch control apparatus according to any preceding claim further **characterized in that** the clutch control apparatus further comprises a means for determining an abrasion amount of the clutch disc (23), wherein the controlling means (41) judges that the axial spacing between the diaphragm spring (25) and the pressure plate (24) is needed to be changed by the adjusting means (29) when the determined abrasion amount is greater than a predetermined abrasion amount.

## Patentansprüche

1. Kupplungssteuerungsgerät umfassend:
eine Kupplungsbaugruppe mit:
einem Schwungrad (21), das zusammen mit einer Abtriebswelle (10a) einer Antriebskraftquelle drehbar ist,
einer Kupplungsscheibe (23), die zwischen einer Druckplatte (24) und dem Schwungrad (21) in Reibeingriff bringbar ist, um eine Reibungs-Antriebsverbindung einzuführen,
einer Tellerfeder (25), die in der Lage ist, die Reibungs-Antriebsverbindung der Kupplungsscheibe (23) zu ändern, wenn die Tellerfeder (25) durch ein Stellglied mit einer Kraft (30) beaufschlagt wird;
und einer Einstellungseinrichtung (29), die zwischen der Druckplatte (24) und der Tellerfeder (25) zum Übertragen einer Betätigungskraft von der Tellerfeder (25) zu der Druckplatte (24) und zum Variieren eines axialen Abstands zwischen der Tellerfeder (25) und der Druckplatte (24) vorgesehen ist, um einen Verschleiß der Kupplungsscheibe (23) auszugleichen;
und einer Steuerungseinrichtung (41) zum Steuern des Betriebs des Stellglieds (30),
**dadurch gekennzeichnet, dass** die Steuerungseinrichtung (41) den Betrieb des Stellglieds (30) zum Ändern des axialen Abstands zwischen der Tellerfeder (25) und der Druckplatte (24) steuert, während eine Antriebskraftquelle nicht aktiv ist, wenn die Steuerungseinrichtung (41) beurteilt, dass der axiale Abstand zwischen der Tellerfeder (25) und der Druckplatte (24) durch die Einstellungseinrichtung (29) zu ändern ist.

2. Kupplungssteuerungsgerät nach Anspruch 1, wobei die Steuerungseinrichtung (41) beurteilt, ob der Axialabstand zwischen der Tellerfeder (25) und der Druckplatte (24) durch die Einstellungseinrichtung (29) zu ändern ist, wenn die Antriebskraftquelle nicht aktiv ist, oder nicht.

3. Kupplungssteuerungsgerät nach einem der Ansprüche 1 oder 2, wobei die Steuerungseinrichtung (41) den Betrieb des Stellglieds (30) zum Ändern des Axialabstands zwischen der Tellerfeder (25) und der Druckplatte (24) durch die Einstellungseinrichtung (29) steuert, wenn eine Drehzahl der Antriebskraftquelle im Wesentlichen Null ist.

4. Kupplungssteuerungsgerät nach einem der Ansprüche 1, 2 oder 3, wobei die Steuerungseinrichtung (41) den Betrieb des Stellglieds (30) zum Ändern des Axialabstands zwischen der Tellerfeder (25) und der Druckplatte (24) durch die Einstellungseinrichtung (29) steuert, wenn eine Fahrzeuggeschwindigkeit im Wesentlichen Null ist.

5. Kupplungssteuerungsgerät nach einem der vorangehenden Ansprüche, wobei die Steuerungseinrichtung (41) den Betrieb des Stellglieds (30) zum Ändern des Axialabstands zwischen der Tellerfeder (25) und der Druckplatte (24) durch die Einstellungseinrichtung (29) von dem Zeitpunkt, ab dem die Antriebskraftquelle anhält, bis zu der Zeit steuert, bei der die Kupplungsscheibe (23) mit dem Schwungrad (21) in Reibeingriff ist.

6. Kupplungssteuerungsgerät nach einem der vorangehenden Ansprüche, außerdem **dadurch gekennzeichnet, dass** das Kupplungssteuerungsgerät außerdem eine Einrichtung umfasst, um ein Verschleißausmaß der Kupplungsscheibe (23) zu bestimmen, wobei die Steuerungseinrichtung (41) beurteilt, dass der Axialabstand zwischen der Tellerfeder (25) und der Druckplatte (24) durch die Einstellungseinrichtung (29) zu ändern ist, wenn das bestimmte Verschleißausmaß größer als ein vorbestimmtes Verschleißausmaß ist.

## Revendications

1. Dispositif de commande d'embrayage comprenant :
un ensemble d'embrayage comprenant
une roue volante (21) pouvant tourner de manière solidaire avec un arbre de sortie (10a) d'une source de puissance d'entraînement,
un disque d'embrayage (23) pouvant être embrayé par friction entre un plateau de pression (24) et la roue volante (21) afin d'établir une liaison d'entraînement par friction,
un ressort à diaphragme (25) capable de changer la liaison d'entraînement par friction du disque d'embrayage (23) lorsque le ressort à diaphragme (25) est appliqué avec une certaine force par un actionneur (30),
et un moyen de réglage (29) disposé entre le plateau de pression (24) et le ressort à diaphragme (25) destiné à transmettre une force de fonctionnement du ressort à diaphragme (25) au plateau de pression (24) et destiné à faire varier un espacement axial entre le ressort à diaphragme (25) et le plateau de pression (24) pour compenser l'usure du disque d'embrayage (23), et
un moyen de commande (41) destiné à commander le fonctionnement de l'actionneur (30),
**caractérisé en ce que** le moyen de commande (41) commande le fonctionnement de l'actionneur (30) pour changer l'espacement axial entre le ressort à diaphragme (25) et le plateau de pression (24) pendant une source de puissance d'entraînement est inactive lorsque le moyen de commande (41) évalue que l'espacement axial entre le ressort à diaphragme (25) et le plateau de pression (24) doit être changé par le biais du moyen de réglage (29).

2. Dispositif de commande d'embrayage selon la revendication 1, dans lequel le moyen de commande (41) évalue si l'espacement axial entre le ressort à diaphragme (25) et le plateau de pression (24) doit ou non être changé par le biais du moyen de réglage (29) lorsque la source de puissance d'entraînement est inactive.

3. Dispositif de commande d'embrayage selon l'une quelconque des revendications 1 et 2, dans lequel le moyen de commande (41) commande le fonctionnement de l'actionneur (30) pour changer l'espacement axial entre le ressort à diaphragme (25) et le plateau de pression (24) par le biais du moyen de réglage (29) lorsqu'une vitesse de rotation de la source de puissance d'entraînement est pratiquement nulle.

4. Dispositif de commande d'embrayage selon l'une quelconque des revendications 1, 2 et 3, dans lequel le moyen de commande (41) commande le fonctionnement de l'actionneur (30) pour changer l'espacement axial entre le ressort à diaphragme (25) et la plaque de pression (24) par le biais du moyen de réglage (29) lorsque la vitesse du véhicule est pratiquement nulle.

5. Dispositif de commande d'embrayage selon l'une quelconque des revendications précédentes, dans lequel le moyen de commande (41) commande le fonctionnement de l'actionneur (30) pour changer l'espacement axial entre le ressort à diaphragme (25) et la plaque de pression (24) par le biais du moyen de réglage (29) jusqu'à l'instant où le disque d'embrayage (23) est embrayé par friction avec la roue volante (21) à partir de l'instant auquel la source de puissance d'entraînement s'arrête.

6. Dispositif de commande d'embrayage selon l'une quelconque des revendications précédentes, **caractérisé en outre en ce que** le dispositif de commande d'embrayage comprend en outre un moyen destiné à déterminer une quantité d'abrasion du disque d'embrayage (23), dans lequel le moyen de commande (41) évalue que l'espacement axial entre le ressort à diaphragme (25) et la plaque de pression (24) doit être changé par le biais du moyen de réglage (29) lorsque la quantité d'abrasion déterminée est supérieure à une quantité d'abrasion prédéterminée.
